(19) **Europäisches Patentamt**

**European Patent Office**

**Office européen des brevets**

(11) Publication number: **0 063 821**
**A1**

(12) # EUROPEAN PATENT APPLICATION

(21) Application number: **82103588.8**

(22) Date of filing: **27.04.82**

(51) Int. Cl.³: **C 02 F 1/72**, C 02 F 1/74, C 02 F 1/52

(30) Priority: **29.04.81 IT 2143681**

(71) Applicant: **PRODECO S.p.A., Piazza Boldrini, I-20097 San Donato Milanese (Milano) (IT)**

(43) Date of publication of application: **03.11.82 Bulletin 82/44**

(72) Inventor: **Spina, Nicola, Via Triulziana, I-22 San Donato Milanese Milano (IT)**

(84) Designated Contracting States: **AT BE CH DE FR GB IT LI LU NL SE**

(74) Representative: **Bühling, Gerhard, Dipl.-Chem. et al, Patentanwaltsbüro Tiedtke-Bühling-Kinne Grupe-Pellmann-Grams-Dragotti Bavariaring 4, D-8000 München 2 (DE)**

(54) **A process for the treatment of sulfide containing waters.**

(57) The effluent waters containing sulfides, possibly containing also polluting organic compounds, are depurated by catalytic oxidation of the sulfides to elemental sulfur, and flocculation with an aluminium compound in the presence of an anionic polyelectrolyte. The catalyst is a compound of a metal of the VII or VIII group of the periodic system, preferably manganese sulfate.

EP 0 063 821 A1

The present invention relates to a process for the treatment of waste waters containing sulfides, particularly when, besides the sulfides, organic substances are also present. A typical example of a waste water of this kind is represented by the tannery effluents. To date the removal of the sulfides from the waste waters containing them has been carried out by having essentially recourse to two tecniques.

The first one comprises the acidifying of the waste water until the development of hydrogen sulfide is made to take place, it being removed with air and burnt.

Owing to the hazards of the hydrogen sulfide, this treatment must take place in closed tanks or environnments; moreover the acidic effluent must be neutralized before the discharge and there is no simultaneous removal of the polluting organic substances, whereby a subsequent treatment specifically aiming to their elimination is necessary.

As it is evident the treatment on the whole involves remarkably high costs. The second technique, which is the most widespread one, consists in the precipitation of the sulfides in form of iron sulfide by addition to the water of an iron salt (sulphate or chloride) having a flocculating action. Simultaneously the removal of the suspended organic substances takes pla ces owing to the flocculation.

In this case too, relevant problems and drawbacks exist, the most serious of which is that of the production of great amounts of toxic muds, the disposal of which is difficult and expensive.

It is also known from the literature that the sulfides can be catalytical ly oxidized to elemental sulphur, but such a teaching did never found practical use both due to the relevant complexity from the technological point of view, and owing to the problems connected to the disposal of the resulting muds.

The main purpose of the present invention is that of providing a treatment of sulfide containing waters, by which the afore mentioned problems are essentially eliminated, with contained costs and with a high depuration degree.

Another purpose of the invention is that of providing a treatment of the afore said type by which the simultaneous removal of the organic substances present in the water to be treated is permitted.

These and other purposes are achieved by the process of the invention which contemplates the steps of catalytic oxidation to elemental sulphur of the sulfides present in the water, and of flocculation of the resulting water with a flocculating agent, preferably an aluminium compound in the presence of an anionic polyelectrolyte.

As it will be seen from the experimental results as hereinafter reported, by the process of the invention there is not only avoided the production of hydrogen sulfide, but a volume of muds relevantly reduced with respect to the conventional process is obtained, and these muds are not only non toxic, but are liable to an anaerobic fermentation to form combustible gases, especially methane, with a related energy recovery.

The oxidation catalyst used in the process of the invention is a compound, for instance a sulphate, halide and the like, of a metal of the VII or VIII group of the periodic system, such as nickel, cobalt, palladium, manganese: the manganese sulphate is preferred since, besides being the less toxic, the amounts to be used are such as to ensure a minimum presence in the flocculation muds, widely below the limits set forth by the law.

The amounts of catalyst are of the order of parts per million; amounts of 10 to 30 ppm are enough under the conditions of the process of the invention.

As the oxidant the air oxygen is preferred, although it is not a limiting factor.

The oxidation is carried out at a pH of between 8 and 9 and under stirring.

Under these conditions there takes place the quantitative conversion of the sulfides to sulphur and that is one of the surprising features of the invention since, even at lower values of pH and in the presence of air, the sulphur of the sulfides should be developed in form of $H_2S$ and the oxidation thereof should not be possible, all the more that the simulta neous presence of organic substances should also be an obstacle to the o-
xidation from sulfide to sulphur.

Upon the oxidation step is completed, the water is treated with a flocculating agent in the presence of an anionic polyelectrolyte, whereby there
are separated, by being included in the flocks of the flocculating agent,
the sulphur, the suspended substances and most of the organic substances
present in the water.

As the flocculating agent an aluminium compound is used, preferably one
of the compounds known as aluminium hydroxychlorides.

Among these compounds those of polymeric nature are particularly suitable,
namely those comprising in their molecule, besides aluminium and chlorine
atoms, also -OH groups.

The flocculating agent is preferably used in an amount of 200 to 300 ppm.
However the use of different flocculating agents, such as ferrous sulpha
te, ferric chloride, etc. is also contemplated in the scope of the inven
tion, provided that the anionic polyelectrolyte is present.

In turn the polyelectrolytes are well known and already widely used in the
field of the water treatment. To date, however, in the specific field of
the water treatment use was made of polyelectrolytes of cationic type.

It has been now found and is another surprising feature of the present
invention hat the anionic polyelectrolytes are those permitting the re -
sults sought by the present invention to be achieved, whereas it does not
occur with the cationic polyelectrolytes.

the supernatant liquid remaining after the flocculation can be thereafter
subjected to further depuration treatments, for example of biological type, which are made necessary with respect to the possible polluting char
ge which still remains in the liquid itself.

The primary muds resulting from the flocculation, possibly supplemented
with the secundary muds originated from the biological treatment of the
supernatant liquid, may undergo the usual treatments of thickening, dehy
dration and disposal.

Preferably, however, they are subjected to anaerobic digestion, giving relevant amounts of methane, useful as direct or indirect energy source.
In addition by the anaerobic digestion the volume of the muds is furthermore reduced, the muds being moreover more stable.

Independently from the type of mud treatment (anaerobic digestion or other
treatment), the primary and/or secundary muds are preferably dehydrated
by filtration and still more preferably such a filtration takes place after the addition of 50 to 80 ppm of an anionic polyelectrolyte as a filtration aid.

This feature too of the invention is of not negligible importance, if account is taken of the fact that to date the muds resulting from the precipitation of the sulfides did not only constitute a problem as regards
their disposal, but did not permit any energy recovery of the afore said
type.

In the following example the results obtained using for the waste waters
of a tannery both the conventional process of precipitation of the sulfides with iron salts and lime, and the process of the invention, are repor
ted.

The daily effluent (9,000 cu.m) of a tannery was treated, it having the
following characteristics:

| | | |
|---|---|---|
| suspended solids | 3,500 | ppm |
| sulfides (as $S^=$) | 200 | ppm |
| COD | 6,725 | ppm |
| $BOD_5$ | 3,000 | ppm |

(a) Conventional process.

   The effluent waters were treated with 5,000 kg of 98% sulfuric acid,
   1,000 kg of hydrated lime, 15,000 kg of ferrous sulphate, 18 kg of
   anionic polyelectrolite and 75 kg of cationic polyelectrolyte.

(b) Process of the invention

   The effluent waters were treated with 8,000 kg of 98% sulfuric acid,and
   a catalytic oxidation was carried out in the presence of manganese
   sulphate (about 135 kg), air being blown and under vigorous stirring.

Upon the oxidation was completed, 2,700 kg of aluminium polyhydroxychloride (Prodefloc AC 190, manufactured and sold by Prodeco S.p.A.) and 84 kg of anionic polyelectrolyte (Prodefloc A/3309, manufactured and sold by Prodeco S.p.A.) were added.

In the following table the data relating to the resulting muds are reported,(those of the conventional process being indicated in column A and those of the process of the invention being indicated in column B):

| Muds | A | B |
|---|---|---|
| feed to the thickener | 2,700 cu.m | 2,230 cu.m |
| feed to the filters | 1,200 cu.m | 890 cu.m |
| Dry solid % on the filter cake | 55 metric | 46 metric |
| sulfides | absent | absent |

From the comparison of the columns A and B the advantages achieved by the present invention as mud volume clearly appear. If account is taken of the fact that the amounts indicated in the table are referred to the operation of one day, the advance provided by the invention is more conspicuous.

Also in terms of cost of additives the invention is relevantly advantageous and such an advantage is still greater if account is taken of the energy recovery resulting from the anaerobic fermentation, which is possible only with the muds and thus with the process of the invention.

It is meant that conceptually equivalent modifications and changes are possible and thus contemplated by the present invention.

CLAIMS

1) A process for the treatment of waters containing sulfides characterized by the steps of catalytic oxidation to elemental sulphur of the sulfides, in the presence of a compound of a metal of the VII and VIII groups of the periodic system, and of flocculation of the resulting water with a flocculating agent and in the presence of an anionic polyelectrolyte.

2) A process according to claim 1, characterized in that said catalytic compound is manganese sulphate and the oxidation takes place at a pH of 8 to 9, by means of the air oxigen and under stirring.

3) A process according to claim 2, characterized in that the catalyst is used in an amount not greater than 30 ppm.

4) A process according to claim 1, characterized in that said flocculating agent is an aluminium compound.

5) A process according to claim 4, characterized in that said aluminium compound is an aluminium polyhydroxychloride.

6) A process according to claim 5, characterized in that said aluminium polyhydroxychloride is used in amount of between 200 and 300 ppm.

7) A process according to claim 5, characterized in that the primary mud resulting from the flocculation step is subjected to anaerobic digestion.

8) A process according to claim 5, characterized in that the muds are filtered after the addition of an anionic polyelectrolyte in an amount of 50 to 80 ppm.

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| X | <u>GB - A - 2 000 757</u> (BP)<br>* Abstract; page 1, lines 47-48 *<br>-- | 1,2 | C 02 F 1/72<br>C 02 F 1/74<br>C 02 F 1/52 |
| X | <u>GB - A - 1 534 085</u> (BAYER)<br>* Claims 1,4,5; page 2, lines 22-25 *<br>-- | 1-3 | |
| X | <u>GB - A - 1 400 632</u> (TEXACO)<br>* Claims 1-4 *<br>-- | 1,3 | **TECHNICAL FIELDS SEARCHED (Int.Cl. 3)** |
| A | <u>GB - A - 1 563 996</u> (CITY)<br>* Page 1, lines 13-25, 37-40 *<br>---- | 1,4-6 | C 02 F |

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

| X | The present search report has been drawn up for all claims | | |
|---|---|---|---|
| Place of search<br>VIENNA | Date of completion of the search<br>02-07-1982 | Examiner<br>WILFLINGER | |

EPO Form 1503.1 06.78